# EUROPEAN PATENT APPLICATION

(11) **EP 2 608 110 A1**
(43) Date of publication of application: **26.06.2013**
(21) Application number: 12195883.9
(22) Date of filing: 06.12.2012
(51) Int. Cl.: G06K 9/00

(54) **Processing cluster and method for processing audio and video content**

(30) Priority: 21.12.2011 EP 11306737
(71) Applicant: Thomson Licensing, 92130 Issy-les-Moulineaux (FR)
(72) Inventor: Kubsch, Stefan, 31559 Hohnhorst (DE); Pieper, Michael, 30659 Hannover (DE); Hui, Li, 30539 Hannover (DE); Glaeser, Frank, 30449 Hannover (DE)
(74) Representative: Schmidt-Uhlig, Thomas

(57) **Abstract**

A processing cluster, a method for processing audio and video content (AV-content) 2 and the use of a computer cluster for processing AV-content is provided. Processing of AV-content 2 is performed by application of a plurality of different image processing algorithms. The algorithms are classified as a function of their image processing characteristic which is a function of a number of frames of the AV-content 2 which is required for performing the respective algorithm. Temporal video segmentation of the AV-content 2 is performed and the AV-content 2 is segmented into a plurality of separate scenes 6, shots 4 and/or sub-shots 5. Scenes 6, shots 4 and sub-shots 5 of the AV-content 2 are allocated to an image processing algorithm. The allocation is based on the class of the respective algorithm and execution of said algorithm is restricted to the frames of the allocated scene 6 shot 4 or sub-shot 5 of the AV-content 2.

## Description

### FIELD OF THE INVENTION

The invention relates to a method and to a processing cluster for processing audio and video content comprising a plurality of video frames, wherein processing of the audio and video content is performed by application of a plurality of different image processing algorithms. The invention further relates to the use of a computer cluster for execution of the method for processing the audio and video content.

### BACKGROUND

Today, large amount of audio and video content (in the following also referred to as AV-content) is made available in online media centers and on various media, such as DVD and Blu-Ray. The AV-content is provided with metadata allowing a user to comfortably browse the AV-content on a content based basis, e. g. by selecting different topics of interest, certain actors, scenes or the like. Nowadays, audio and video content, e. g. a Hollywood film, is often generated using digital recording technology. Accordingly, the AV-content is available as digital data. The AV-content may be subject of further digital post-processing steps such as cutting, enhancement of audio and video quality and generation of metadata. Apart from new productions, there is a large amount of AV-content which is still available on classical analogue media only. These media have to be digitalized, for example by scanning the respective movie rolls and by converting the scanned information into suitable digital media formats. During or after these digitalization steps, metadata may be generated to provide a future user with content based user menus etc.

A variety of image processing algorithms is available for editing AV-content. Widely known image processing algorithms are those for measuring the quality of AV-content, for example with respect to noise, contrast, brightness and sharpness. Further image processing algorithms are used for improving the quality of the AV-content. For example, dirt detection and removal and scratch detection and removal may be performed. More complex image processing algorithms that mainly focus on generation of metadata are scene and shot detection algorithms including the selection of key frames for the respective scene or shot. An overview of image processing algorithms is for example given in "Scene detection in Hollywood movies and TV shows" by Zeeshan Rasheed and Mubarak Shan. Further image processing algorithms which focus on generation of metadata are for example: face detection, face clustering and face recognition.

However, due to the large amount of raw data which has to be processed during reconditioning or reworking of the AV-content, high processing power or long processing time is necessary for reconditioning or quality checking the AV-content and/or for generation of metadata for the respective AV-content.

### SUMMARY

It is an object of the invention to provide a method and a processing cluster for processing audio and video content and to provide a use of a computer cluster for execution of image processing algorithms which allow a faster and more effective processing of audio and video content.

In one aspect of the invention, a method for processing audio and video content (within the context of this specification also referred to as AV-content) comprising a plurality of video frames is provided. Processing of the AV-content, for example a cinema movie, a television program, show or report, is performed by application of a plurality of different image processing algorithms. By way of an example only, these different image processing algorithms may be noise, contrast, brightness and/or sharpness detecting algorithms for performing a quality check of the AV-content and/or algorithms for quality improvement such as dirt detection and removal and scratch detection and removal. Further video processing algorithms may be face detection, face clustering and/or face recognition as well as image processing algorithms for detecting missing frames or drop outs in the AV-content.

According to aspects of the invention, the image processing algorithms are classified as a function of their image processing characteristic. The image processing characteristic is a function of a number of frames of the AV-content which are required for performing the respective algorithm. There are certain image processing algorithms which may be executed on a single frame of AV-content. Such an image processing algorithm is for example brightness or sharpness detection. Further image processing algorithms are executed on a plurality of frames, e. g. on a shot or a scene of the AV-content. Examples for these image processing algorithms are: face detection and face clustering. According to further aspects of the invention, temporal video segmentation of the AV-content is performed. Due to the temporal video segmentation, the AV-content is segmented into a plurality of separate scenes and sub-scene segments. Each of the preferably subsequent scenes comprises further preferably at least one sub-scene segment having a plurality of frames.

According to an aspect of the invention, a sub-scene segment may be a shot or a sub-shot, wherein the latter is a segment or part of a shot. While a shot is commonly known in image processing, a sub-shot will be defined later in more detail. For the moment, the hierarchy: scene/shot/sub-shot/frame will be sufficient for understanding the mentioned aspects of the invention.

Further, according to aspects of the method for processing the AV-content, a scene or sub-scene segment of the AV-content is allocated to an image processing algorithm, wherein the allocation is based on the class of the respective algorithm. Execution of the image processing algorithm may be restricted to the frames of the allocated sub-scene segment or scene of the AV-content. In other words, the method according to aspects of the invention provides an advantageous scheduling for the different image processing algorithms.

Advantageously, the method according to aspects of the invention allows distributing the processing load for processing the AV-content in a processing cluster. The workload may be distributed and this will help optimizing the cycle time of the image processing algorithms. Another benefit of the method according to aspects of the invention is that the resulting quality for several image processing algorithms may be improved due to the restriction of the respective algorithm to the scenes and/or sub-scene segments of the AV-content, i.e. due to the restriction of the respective algorithm to the shot or sub-shot.

According to the prior art, the overall processing time for editing AV-content is determined by the slowest algorithm. The next step in AV-content handling may be performed only if the previous algorithm is finished. The performance of image processing algorithms can vary from a few video frames per minute to real time processing. However, in most cases, the processing performance of a single algorithm, which is normally a given tool, is no parameter which may be significantly influenced or optimized. In other words, there are limited possibilities to optimize the image processing algorithm itself. The method according to aspects of the invention overcomes this technical drawback. An efficient and optimized scheduling of the image processing algorithms may be provided due to the allocation of the image processing algorithms to the respective scenes or sub-scene segments of the AV-content. An advantageous side effect, which has been recognized, is that the results for some types of image processing algorithms may be improved, too.

According to an advantageous embodiment of the invention, the algorithms for image processing are classified in the classes "inter frame algorithm" and "intra frame algorithm". Algorithms of the class "intra frame algorithm" require a single frame of the AV-content for execution. In contrast, algorithms of the class "inter frame algorithm" require a plurality of preferably subsequent frames of the AV-content. Sub-shots, shots and scenes of the AV-content are allocated to algorithms of the class "inter frame algorithm" and execution of the respective algorithms is restricted to the respective frames of the allocated sub-shot, shot or scene of the AV-content. Advantageously, inter frame algorithms, for example face detection, face clustering, face recognition or algorithms for missing frame detection or drop out detection may be performed on and are restricted to a respective scene, shot or sub-shot of the AV-content.

Advantageously, a plurality of sub-scene segments and/or scenes may be allocated to a plurality of algorithms which are executed on a plurality of different hardware units like processors, computer sub-units or even separate computers. It is further advantageous, if processing of the AV-content is managed by parallel execution of the different image processing algorithms. This will lead to a significant reduction of the overall processing time. Even for algorithms which are typical intra frame algorithms, for example noise, contrast, brightness and sharpness detection, a restriction of the respective algorithm to a scene, shot or sub-shot of the AV-content may be advantageous. It has been recognized, that the results of these image processing algorithms may be improved due to this restriction.

According to an aspect of the invention, the class "inter frame algorithm" comprises subclasses, namely the subclass "shot-based algorithm" and the subclass "scene-based algorithm". Accordingly, sub-shots and shots of the AV-content are allocated to image processing algorithms of the subclass "shot-based algorithm" and scenes of the AV-content are allocated to image processing algorithms of the subclass "scene-based algorithm". The processing time for execution of the image processing algorithms may be reduced. A very distinct allocation of image processing algorithms may be performed based on the individual requirement for raw data of each algorithm. For example, dirt detection and removal as well as scratch detection and removal are algorithms which a typically carried out on a single shot. On the other hand, algorithms like face clustering are advantageously performed on a scene. The algorithms may be executed as parallel working processes, e. g. in a parallel computing architecture. This will lead to a significant reduction of the overall processing time.

According to another aspect of the invention, a processing cluster for processing AV-content comprising a plurality of video frames is provided. The processing cluster comprises a plurality of hardware units (e. g. a plurality of processor cores, a plurality of more or less autonomous computer sub-units or even a cluster of separate machines) which are for executing a plurality of different image processing algorithms. For processing the AV-content, the processing cluster is configured to classify the algorithms as a function of their image processing characteristic. This image processing characteristic is a function of a number of frames of the AV-content which are required for performing the respective algorithm. Further, a temporal video segmentation of the AV-content is performed by the processing cluster. The AV-content is segmented into a plurality of separate scenes and sub-scene segments, wherein each scene comprises at least one sub-scene segment having a plurality of frames. The processing cluster is further configured to allocate a scene or a sub-scene segment of the AV-content to an algorithm which is executed on a hardware unit, wherein the allocation is based on the class of the respective algorithm. Execution of the image processing algorithm is restricted to the frames of the allocated scene or sub-scene segment of the AV-content.

The processing cluster may be further configured to perform temporal video segmentation in that a sub-scene segment is a shot or a sub-shot. While a shot is a well known entity in image processing a more precise definition of a sub-shot will be given further below.

According to another advantageous aspect of the invention, a computer cluster is used for execution of the method according to aspects of the invention, wherein each image processing algorithm is executed on a single computer of the computer cluster.

Same or similar advantages which have been already mentioned with respect to the method according to aspects of the invention apply to the processing cluster and to the use of the computer cluster in a same or similar way and are therefore not mentioned repeatedly.

### BRIEF DESCRIPTION OF DRAWINGS

Further aspects of the invention will ensue from the following description of example embodiments with reference to the accompanying drawings, wherein
FIG. 1 is a simplified diagram illustrating a temporal video segmentation and job partition for processing of AV-content,
FIG. 2 is a simplified diagram illustrating a segmentation of AV-content at different hierarchical levels and
FIG. 3 is a simplified block diagram of a processing cluster for processing audio and video content.

### DETAILED DESCRIPTION OF EXAMPLE EMBODIMENTS

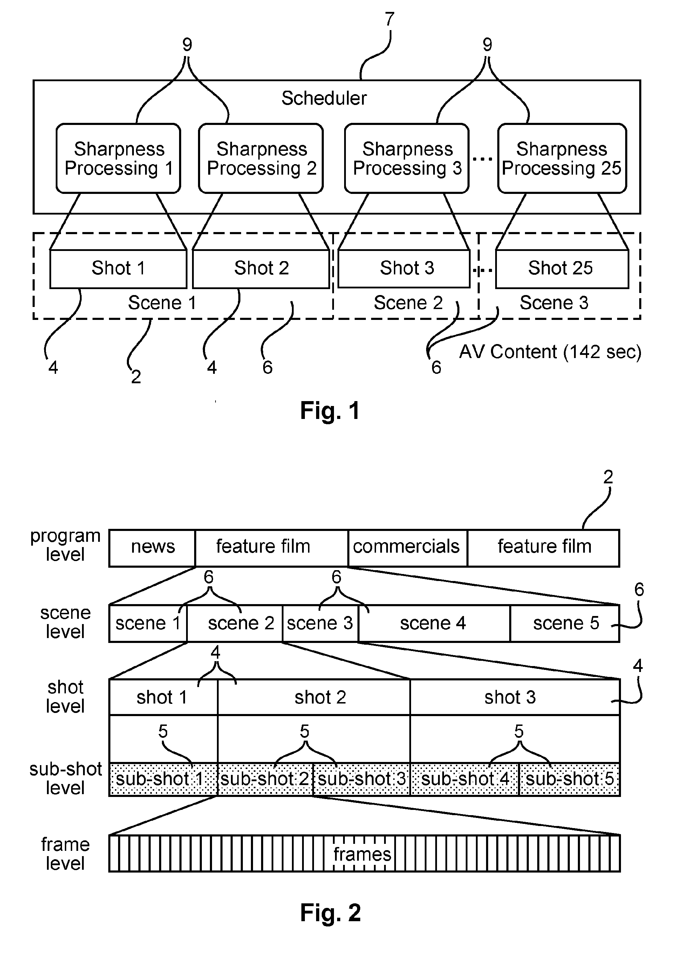

AV-content, for example a cinema movie, a television program, a television show or a television report is schematically shown by the block: AV-content 2 in FIG. 1. According to the embodiment, the AV-content 2 comprises three scenes 6, namely scene 1 to scene 3 which in comprise at least one shot. For instance, the first scene 6 (scene 1) comprises two shots 4, namely shot 1 and shot 2. Further, the second scene 6 (scene 2) comprises a single shot 4 only (i. e. shot 3). The third scene 6 (scene 3) comprises a plurality of shots 4, namely shot 4 to shot 25. The segmentation of the AV-content 2 into a plurality of scenes 6 and shots 4 is performed by temporal video segmentation.

The AV-content 2 has to be processed. By way of an example only, the AV-content 2 may be an old Hollywood movie which has been digitalized recently and which is desired to be published in a high quality version and which is further a subject of metadata generation because the customer should be provided with a modern and comfortable user menu. A plurality of image processing algorithms are available "of the shelf" for this purpose and have been mentioned above.

However, before processing the AV-content 2, according to the embodiment of the invention, temporal video segmentation is performed and the AV-content 2 is segmented into a plurality of scenes 6 and shots 4. Within the context of this specification, a scene should be defined as one of the sub-divisions of a play in which the setting is fixed or when continuous action is presented in one place. Further, within the context of this specification, too, a meaningful definition for a shot is an unbroken sequence of frames taken from one camera.

A variety of different image processing algorithms is available for performing temporal video segmentation and are for example known from "Temporal video segmentation: a Survey" by Irena Koprinska and Sergio Carrato. The preprocessed AV-content 2, i. e. the AV-content 2 which is segmented into a plurality of scenes 6 and shots 4 provides a basis for a scheduler 7 which assigns the respective portions (i. e. the shots 4) of the AV-content 2 to certain image processing algorithms. In the embodiment of FIG. 1, the AV-content 2 is segmented into three scenes 6 and twenty-five shots 4 and accordingly image processing algorithms which are shot- or scene-based may be carried on the separate shots 4 and scenes 6 wherein each algorithm is restricted to the frames of the respective shot 4 or scene 6. By way of an example only, sharpness processing is carried out. The twenty-five shots 4 are assigned to twenty-five sharpness processing jobs 9 by the scheduler 7.

According to the embodiment, the processing jobs 9 may be assigned to a plurality of different, preferably parallel working image processing algorithms which are executed on a number of different hardware units.

Further, the scenes 6 and shots 4 may be assigned to different image processing algorithms, wherein the question whether a scene 6 or a shot 4 is assigned to the respective algorithm is a function of the characteristic of the respective algorithm. By way of an example only, a selection of image processing algorithms and their class is given by the following table:

| **Image Processing Algorithm** | **Class** |
|---|---|
| Face Detection | Shot |
| Face Clustering | Scene |
| Face Recognition | Shot |
| Missing Frame | Shot |
| Drop Out | Shot |
| Noise, Contrast, Brightness, Sharpness (Quality Measurement) | Frame |
| Dirt Detection / Dirt Removal | Shot |
| Scratch Detection / Scratch Removal | Shot |

Depending on whether a respective image processing algorithm is a shot- or scene-based algorithm, a shot 4 or scene 6 of the AV-content 2 is assigned to the respective algorithm by the scheduler 7. Frame based image processing algorithms may be assigned to either a shot 4 or a scene 6. According to the embodiment in FIG. 1, the AV-content 2 is separated into twenty-five parallel working jobs 9 each performing sharpness processing on a respective shot 6 of the AV-content 2. The individual jobs 9 may be handed over to respective processing units, e. g. to a computer or server of a processing cluster. At the same time, scene based algorithms like face clustering may be carried out on the respective scenes 6, namely scene 1 to scene 3 of the AV-content 2. Consequently, the scheduler 7 may be configured to hand over the respective frames of a scene 6 to further processing units (not shown).

Even for frame-based algorithms like for example sharpness processing, a restriction to the frames of an individual shot 4 or scene 6 of the AV-content 2 may be advantageous. This will outlined by the following example: It shall be assumed that the AV-content 2 is 142 seconds long and has to be processed on a single processing client. The single sharpness processing would be finished after 32 minutes. According to an embodiment of the invention, first, a temporal video segmentation of the 142 seconds of AV-content 2 is performed which will be finished after about 30 seconds. Subsequently, processing jobs 9 for sharpness processing are scheduled to twenty-five parallel running sharpness processes which will take about 78 seconds. This leads to an overall processing time of only 108 seconds in the here discussed simple example wherein all shots 4 had an equal length. The result is 94 % savings of processing time compared to the single processing solution. In practice, the effective savings can vary depending on the maximum shot duration and the number of available processing clients. However, significant savings of processing time may be expected for AV-content processing which is focused on quality determination as well as for AV-content processing which faces metadata generation like face clustering and face detection. It should be noticed that the temporal video segmentation may be also used for generation of metadata.

In the above-mentioned example, it could be found that the restriction of the respective algorithms to certain shots or scenes is advantageous in that a hard cut between different shots or scenes may be classified as a missing frame by a missing frame detection algorithm. Such areas have to be corrected manually which is a time consuming and expensive process. This may be omitted by preprocessing the AV-content by help of temporal video segmentation.

In FIG. 2, there is a simplified diagram illustrating a segmentation of AV-content 2 at different hierarchical levels, namely a program level, a scene level, a shot level, a sub-shot level and a frame level. The program level is omitted in FIG. 1 for clarity reasons only. According to the embodiment in FIG. 2, this program level comprises several blocks like news, commercials and several feature films. By way of an example only, the second block which is a feature film is segmented into a plurality of scenes 6 (scene 1 to scene 5) by help of temporal video segmentation. A single scene 6, for example scene 2, is further segmented into a plurality of shots 4 (namely shot 1 and shot 2).

It has been already mentioned with respect to FIG. 1 that a scene 6 or a shot 4 may be subject of allocation to a specific image processing algorithm. Such an allocation and distribution of processing jobs may be performed here, too. However, according to the embodiment of FIG. 2, the shots 4 may be further divided into sub-shots 5. Within the context of this specification, shots 4 and sub-shots 5 are referred to as sub-frame segments. By way of an example only, shot 1 comprises a single sub-shot 5 (sub-shot 1) only. The second shot 4 (shot 2) comprises two sub-shots 5 (sub-shot 2 and sub-shot 3), the third shot 4 (shot 3) also comprises two sub-shots 5 (sub-shot 4 and sub-shot 5).

Within the context of this specification, a sub-shot 5 is an unbroken sequence of frames within a shot 4 having small variation in visual content only. As a guide to what is a small variation in visual content, the following rule may be applied. A sub-shot boundary may be inserted in front of a current frame if the displacement between a first frame of the sub-shot 5 and the current frame is more than half of the frame size or if the current frame is different from the first frame of the sub-shot 5 in visual content to a degree that by looking at the two frames only, it is not obvious that they belong to the same shot 4. Sub-shots 5 may be detected by implementing thresholding algorithms for example.

According to the embodiment in FIG. 2, sub-shots 5 may be made a job for an image processing algorithm by a suitable job scheduler (not shown in FIG. 2). In other words, the execution of the abovementioned image processing algorithms may be restricted to a sub-shot 5 instead or in addition to the already mentioned restriction to a shot 4. Advantageously, there is very little variation of the image content within one sub-shot 5. This will be advantageous for the cycle time of the image processing algorithms.

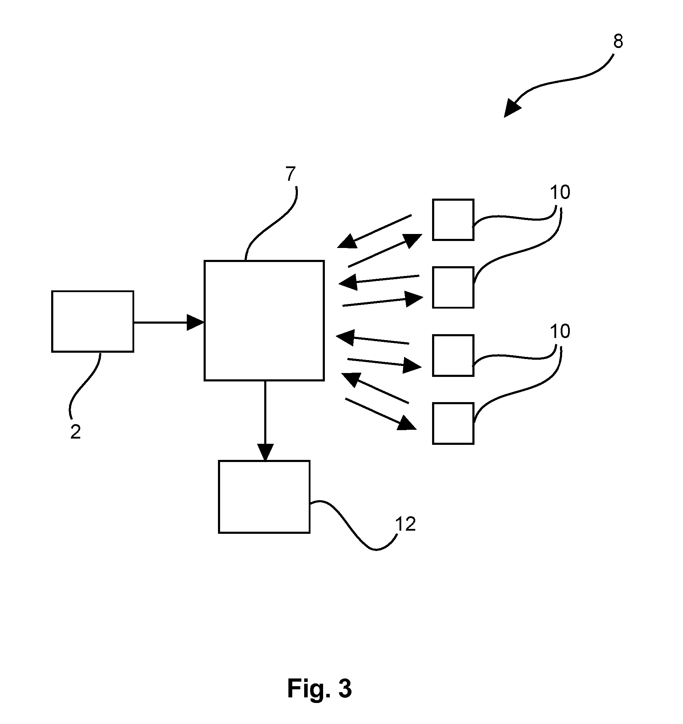

FIG. 3 is a simplified block diagram of a processing cluster 8 for processing AV-content 2. The processing cluster 8 comprises the scheduler 7 receiving the AV-content 2. The scheduler 7 may perform temporal video segmentation on the AV-content 2 wherein the AV-content 2 is segmented into a plurality of separate scenes 6, shots 4 and/or sub-shots 5 (see FIGS. 1 and 2). Individual tasks or jobs are transferred to processing units 10. By way of an example only, each of the processing units 10 receives data of a single shot 4 from the scheduler 7 for performing sharpness processing. The results may be communicated back to the scheduler 7. For example, such a result may be the determined quality of the AV-content 2 which is the result of a sharpness processing algorithm. Further, if for example the image processing algorithm performs dirt detection and removal, the restored AV-content may be transferred back to the scheduler 7 which may concatenate the restored AV-content which is provided by the individual processing units 10. A reconditioned AV-content may be delivered as resulting AV-data 12. According to another embodiment of the invention, the processing unit 8 delivers metadata of the AV-content 2 as resulting AV-data 12.

Although the invention has been described hereinabove with reference to a specific embodiment, it is not limited to this embodiment and no doubt further alternatives will occur to the skilled person that lie within the scope of the invention as claimed.

## Claims

1. A method for processing audio and video content (AV-content) (2) comprising a plurality of video frames, wherein processing of AV-content (2) is performed by application of a plurality of different image processing algorithms, the method comprising the steps of:
a) classifying the algorithms as a function of their image processing characteristic, wherein the processing characteristic is a function of a number of frames of the AV-content (2), which are required for performing the respective algorithm,
b) performing temporal video segmentation of the AV-content (2), wherein the AV-content is segmented into separate scenes (6) and sub-scene segments (4, 5), and wherein each scene (6) comprises at least one sub-scene segment (4, 5) having a plurality of frames,
c) allocating a scene (6) or a sub-scene segment (4, 5) of the AV-content (2) to an algorithm, wherein the allocation is based on the class of the respective algorithm and wherein execution of the algorithm is restricted to the frames of the allocated scene (6) or sub-scene segment (4, 5) of the AV-content (2).

2. The method of processing AV-content (2) according to claim 1, wherein the algorithms are classified in the classes "inter frame algorithm" and "intra frame algorithm", and wherein algorithms of the class "inter frame algorithm" require a single frame of the AV-content (2) for execution and algorithms of the class "intra frame algorithm" require a plurality of frames of the AV-content (2) for execution and wherein sub-scene segments (4, 5) and scenes (6) of the AV-content (2) are allocated to algorithms of the classes "inter frame algorithm" and execution of the respective algorithms is restricted to the frames of the allocated sub-scene segment (4, 5) or scene (6) of the AV-content (2).

3. The method of processing AV-content (2) according to claim 2, wherein the class "inter frame algorithm" comprises sub-classes "shot based algorithm" and "scene based algorithm", and wherein sub-scene segments (4, 5) of the AV-content (2) are allocated to algorithms of the class "shot based algorithm" and scenes 6) of the AV-content (2) are allocated to algorithms of the class "scene based algorithm".

4. The method of processing AV-content (2) according to one of the preceding claims, wherein a plurality of sub-scene segments (4, 5) and/or scenes (6) is allocated to a plurality of algorithms which are executed on a plurality of different hardware units.

5. The method of processing AV-content (2) according to one of the preceding claims, wherein a sub-scene segments is a shot (4) or a sub-shot (5).

6. Processing cluster (8) for processing audio and video content (AV-content) (2) comprising a plurality of video frames, wherein the processing cluster (8) comprises a plurality of hardware units (10) for executing a plurality of different image processing algorithms for processing the AV-content (2), wherein the processing cluster (8) is configured to:
a) classify the algorithms as a function of their image processing characteristic, wherein the processing characteristic is a function of a number of frames of the AV-content (2), which are required for performing the respective algorithm,
b) perform temporal video segmentation of the AV-content (2), wherein the AV-content (2) is segmented into separate scenes (6) and sub-scene segments (4, 5), and wherein each scene (6) comprises at least one sub-scene segments (4, 5) having a plurality of frames,
c) allocate a scene (6) or a sub-scene segment (4, 5) of the AV-content (2) to an algorithm which is executed on a hardware unit (10), wherein the allocation is based on the class of the respective algorithm and wherein execution of the algorithm is restricted to the frames of the allocated scene (6) or sub-scene segment (4, 5) of the AV-content (2).

7. Processing cluster (8) for processing AV-content (2) according to claim 6, wherein the processing cluster (8) is configured to perform temporal video segmentation of the AV-content (2) in that a sub-scene segment (4, 5) is a shot (4) or a sub-shot (5).

8. Use of a computer cluster for execution of the method according to one of claims 1 to 5, wherein each image processing algorithm is executed on a single computer of the computer cluster.
